# EUROPÄISCHE PATENTSCHRIFT

(11) **EP 0 455 023 B1**
(45) Veröffentlichungstag und Bekanntmachung des Hinweises auf die Patenterteilung: **20.07.1994**
(21) Anmeldenummer: 91105874.1
(22) Anmeldetag: 12.04.1991
(51) Int. Cl.: B02C 13/18, A23G 1/04

(54) **Wurfbrecher, insbesondere für Kakaobohnen**
Impact mill, especially for cocoa beans
Broyeur à impact, en particulier pour graines de cacao

(30) Priorität: 04.05.1990 DE 9005091 U
(43) Veröffentlichungstag der Anmeldung: 06.11.1991
(73) Patentinhaber: F.B. LEHMANN Maschinenfabrik GmbH, D-73431 Aalen (DE)
(72) Erfinder: Schmid, Helmut,, W-7080 Aalen/Württ (DE); Krätschmer, Josef, W-7080 Aalen/Würt (DE)
(74) Vertreter: Kern, Wolfgang, Dipl.-Ing.

(56) Entgegenhaltungen:
- FR-A- 1 355 213
- US-A- 3 058 679
- US-A- 3 881 664

## Beschreibung

Die Erfindung betrifft einen Wurfbrecher, insbesondere zum Brechen von Kakaobohnen, mit einer ersten und einer zweiten waagrechten, rotierenden Wurfscheibe, die mit Abstand parallel Übereinander angeordnet und durch einen zentrisch um die Drehachse der Wurfscheibe angeordneten Abstandskörper miteinander drehfest verbunden sind, der sich von der ersten Wurfscheibe ausgehend abwärts erstreckt und von dem aus sich die zweite, untere Wurfscheibe, die einen größeren Durchmesser aufweist als die erste Wurfscheibe, als Ringfläche radial nach außen erstreckt, und mit beide Wurfscheiben mit Abstand umgebenden Prallplatten.

Bei einem bekannten Wurfbrecher dieser Art (US-A-058679) ist jede Wurfscheibe für sich mit einer Reihe Prallplatten umgeben, die rechtwinkelig zur Wurfscheibenebene ausgerichtet sind. Dies hat zur Folge, daß wenigstens ein Teil der bereits beim ersten Aufprall auf die der ersten Wurfscheibe zugeordneten Prallplatten gebrochenen Bohnen zusammen mit den ungebrochenen Bohnen erneut gegen die Prallplatten geschleudert werden und dadurch weiter zerkleinert werden, bevor das ganze Material auf die zweite Wurfscheibe gelangt, um von dort an den diese Wurfscheibe umgebenden Prallplatten weiter zerkleinert zu werden.

Aufgrund dieser Wurfbrecherkonstruktion enthält das Bruchgut einen ziemlich großen Feinanteil, der durch nachgeschaltete aufwendige Abscheider entfernt werden muß und daher unerwünscht ist. Wenn man bedenkt, daß das Brechen von Kakaobohnen den Zweck hat, die Bohnen zu entschalen und nicht die Kerne der Bohnen, die sogenannten Nibs, zu zerkleinern, dann erhält die Erfindungsaufgabe besondere Bedeutung.

Die FR-A-1355213 sowie die US-A-3 881 664 zeigen Wurfbrecher, die entweder nur eine Wurfscheibe mit zwei hintereinandergeschalteten Prallplattenreihen oder eine Wurfscheibe mit diese umgebendem, geschlossenen, sechseckigen Gehäusering aufweisen und deshalb einen hohen Feinanteil durch mehrfaches Brechen des Gutes erzeugen, der im vorliegenden Fall unerwünscht ist.

Die Aufgabe der Erfindung besteht darin, den Wurfbrecher der eingangs genannten Art so weiterzubilden, daß er mit einem wesentlich geringeren apparatetechnischen Aufwand einen zumindest vergleichbaren Zerkleinerungswirkungsgrad aufweist, wobei mit möglichst niedrigen Brecherdrehzahlen eine möglichst hohe Bruchwahrscheinlichkeit erreicht werden soll, indem bereits gebrochenes Gut nicht noch einmal gebrochen wird, weil sichergestellt ist, daß das durch den ersten Aufprall auf die Prallplatten bereits gebrochene Gut nicht auf die zweite Wurfscheibe reflektiert wird, sondern von den Prallplatten herabfällt. Dadurch reduziert sich der Feinanteil des Bruchguts, also beispielsweise von Kakaokernbruch.

Diese Aufgabe wird neuerungsgemäß dadurch gelöst, daß daß die Höhe der Prallplatten so gewählt ist, daß jede Prallplatte beide Wurfscheiben abdeckt und die Prallplatten von oben nach unten schräg nach außen gerichtet sind, so daß die von der ersten Wurfscheibe gegen die Prallplatten geworfenen Bohnen nach dem Brechen von der Prallplatte herabfallen und die nicht gebrochenen Bohnen von der Prallplatte auf die zweite Wurfscheibe reflektiert werden, um von dieser ein zweites Mal gegen die Prallplatte geworfen zu werden.

Vorteilhafte Ausgestaltungen dieses Vorschlags sind in den Unteransprüchen gekennzeichnet.

Die Erfindung wird nachfolgend anhand des in der Zeichnung dargestellten Ausführungsbeispiels näher beschrieben.

In der Zeichnung zeigen:

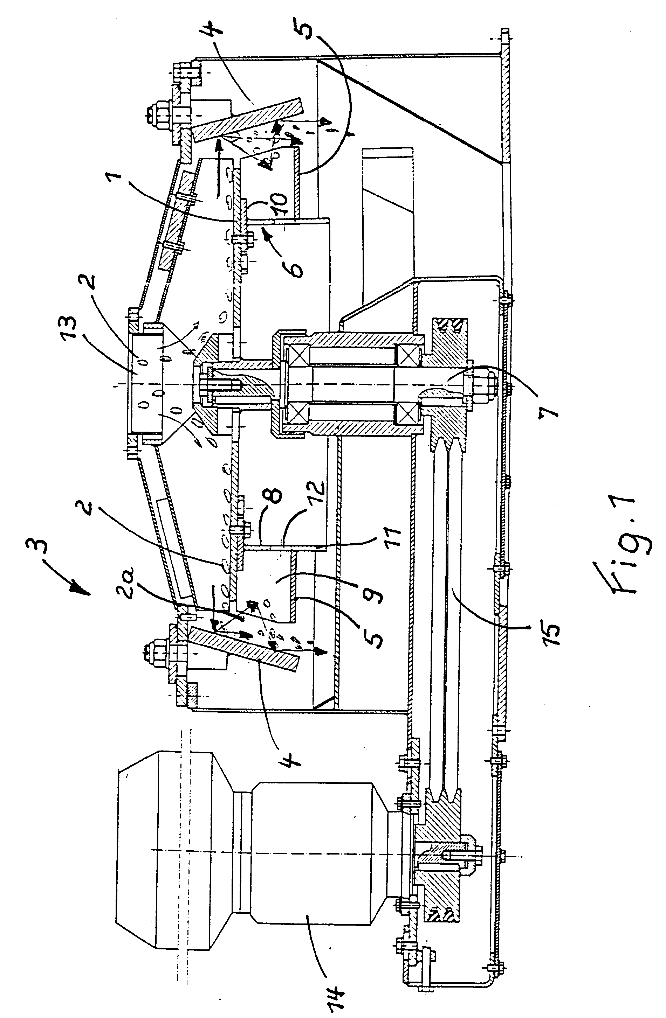

- Fig. 1: eine Querschnittsansicht des neuerungsgemäßen Wurfbrechers und

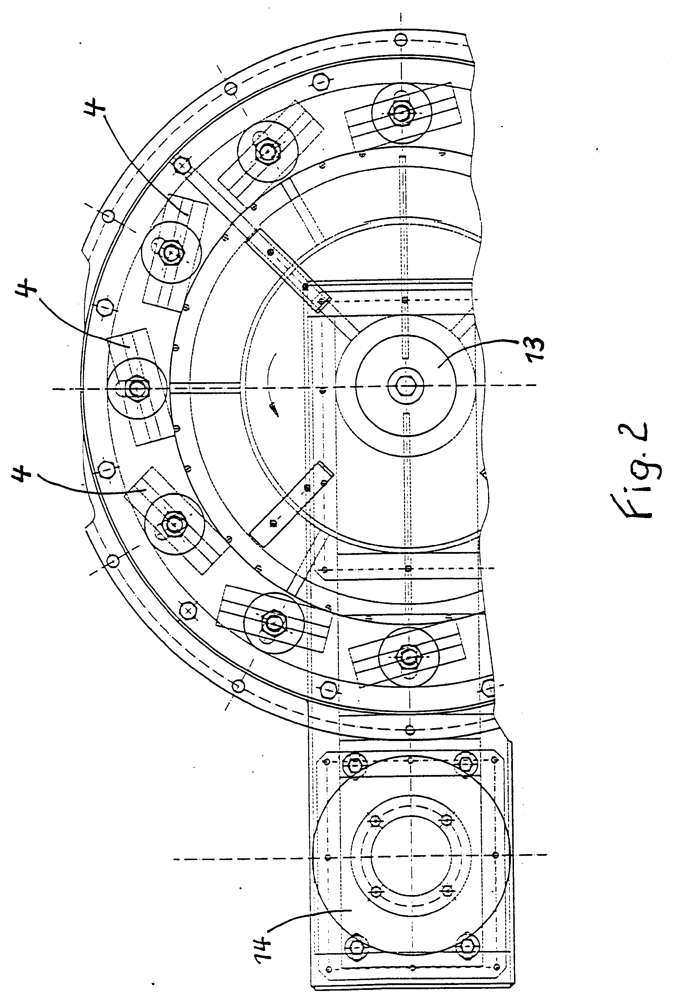

- Fig. 2: eine Teildraufsicht des Wurfbrechers von Fig. 1.

Der in den Zeichnungsfiguren 1 und 2 dargestellte Wurfbrecher 3 weist eine erste Wurfscheibe 1 und eine zweite Wurfscheibe 5 auf, die miteinander durch einen Abstandskörper 6 in Form eines koaxial zu der gemeinsamen Antriebswelle 7 der beiden Wurfscheiben angeordneten Zylinders verbunden sind, der von der Antriebswelle 7 mit Abstand getrennt ist. Die unterhalb der ersten Wurfscheibe 1 angeordnete zweite Wurfscheibe 5 weist einen größeren Durchmesser auf als die erste Wurfscheibe und ist als Ringfläche ausgebildet, die sich radial nach außen erstreckt, wobei der zylindrische Abstandskörper 6 zwischen der ersten und der zweiten Wurfscheibe die Rückwand 8 einer das Bruchgut aufnehmenden Kammer 9 bildet, die oben und unten von den beiden Wurfscheiben begrenzt wird. In der Rückwand 8 befinden sich aus der Kammer9 herausführende Durchbrüche 12.

Die Wurfscheiben sind von Prallplatten 4 umgeben, deren Höhe so gewählt ist, daß jede Prallplatte beide Wurfscheiben 1 und 5 abdeckt.

Der obere die Rückwand 8 der Kammer 9 bildende Wandteil des zylindrischen Abstandskörpers 6 ist mit einem Radialflansch 10 versehen, der gegen die erste Wurfscheibe 1 verschraubt ist. Das untere Ende 11 des genannten Wandteils erstreckt sich in Richtung der Drehachse 7 über die zweite Wurfscheibe 5 hinaus, bildet also eine abwärtsgerichtete Schürze.

Die durch den Aufgabetrichter 13 des Wurfbrechers 3 eintretenden zu brechenden Schüttgutteilchen, also beispielsweise Kakaobohnen 2, gelangen auf die erste rotierende und in etwa waagrecht angeordnete Wurfscheibe 1, die über die Drehachse 7 mit Hilfe des Motors 14 und den Riementrieb 15 angetrieben wird. Die dadurch auf die Bohnen einwirkende Zentrifugalkraft schleudert diese gegen die Prallplatten 4, an der sie zumindest teilweise gebrochen werden. Die gebrochenen Bohnenteilchen fallen von der Prallplatte herab, während die nicht gebrochenen Bohnen 2a auf die zweite Wurfscheibe 5 zurückgeschleudert werden, um von dort ein zweites mal mit etwas höherer Geschwindigkeit gegen die Prallplatten 4 geschleudert zu werden.

Durch diese Hintereinanderschaltung zweier Wurfscheiben ohne zwischengeschaltete Trichter und andere Produktleitorgane wird auf einfache konstruktive Weise die Möglichkeit geboten, bereits gebrochenes Gut nicht noch einmal zu brechen, da die beim ersten Aufprall auf die Prallplatten 4 bereits gebrochenen Bohnen nicht auf die zweite Wurfscheibe reflektiert werden, sondern von den Prallplatten herabfallen. Dadurch reduziert sich auch der Feinanteil des Bruchguts, also beispielsweise des Kakaokernbruchs. Außerdem wird die Bruchwahrscheinlichkeit erhöht, wodurch mit niedrigeren Brecherdrehzahlen gefahren werden kann.

## Patentansprüche

1. Wurfbrecher, insbesondere zum Brechen von Kakaobohnen, mit einer ersten (1) und einer zweiten (5) waagrechten, rotierenden Wurfscheibe, die mit Abstand parallel Übereinander angeordnet und durch einen zentrisch um die Drehachse (7) der Wurfscheibe (1, 5) angeordneten Abstandskörper (6) miteinander drehfest verbunden sind, der sich von der ersten Wurfscheibe (1) ausgehend abwärts erstreckt und von dem aus sich die zweite, untere Wurfscheibe (5), die einen größeren Durchmesser aufweist als die erste Wurfscheibe, als Ringfläche radial nach außen erstreckt, und mit beide Wurfscheiben (1, 5) mit Abstand umgebenden Prallplatten (4), dadurch **gekennzeichnet**, daß die Höhe der Prallplatten (4) so gewählt ist, daß jede Prallplatte beide Wurfscheiben (1, 5) abdeckt und die Prallplatten von oben nach unten schräg nach außen gerichtet sind, so daß die von der ersten Wurfscheibe (1) gegen die Prallplatten (4) geworfenen Bohnen (2) nach dem Brechen von der Prallplatte herabfallen und die nicht gebrochenen Bohnen (2a) von der Prallplatte auf die zweite Wurfscheibe (5) reflektiert werden, um von dieser ein zweites Mal gegen die Prallplatte geworfen zu werden.

2. Wurfbrecher nach Anspruch 1, dadurch **gekennzeichnet**, daß der Abstandskörper (6) ein Zylinder ist, dessen oberer Wandteil einen Radialflansch (10) aufweist, der gegen die erste Wurfscheibe (1) verschraubt ist, und dessen unteres Ende (11) sich in Richtung der Drehachse (7) über die zweite Wurfscheibe (5) hinauserstreckt.

## Claims

1. Impact mill, especially for braking cacao beans, comprising a first (1) and a second (5) horizontal, rotating projection disc being distantly arranged in a parallel superimposed manner and rotationally fixed connected to one another by a distant element (6) positioned centrically with respect to the rotational axis (7) of the projection disc (1, 5), which distant element (6) extending downwardly from the first projection disc (1), and the second, lower projection disc (5) having a greater diameter than the first projection disc extending from the distant element as an annulus radially outwardly and further comprising impact plates (4) distanly surrounding the two projection discs (1, 5) **characterized in** that the height of the impact plates (4) is choosen such that each impact plate covers both projection discs (1, 5) and that the impact plates extend from above to below outwardly in an inclined manner so that the beans (2) being thrown from the first projection disc (1) against the impact plates (4) drop after having been broken from the impact plate and the unbroken beans (2a) are reflected from the impact plate to the second projection disc (5) so that they are thrown from said projection disc a second time against the impact plate.

2. Impact mill according to claim 1, **characterized in** that the distant element (6) is a cylinder the upper wall portion of which comprises a radial flange (10) which is fixed by screws to the first projection disc (1) and the lower end (11) of which extends in direction ofthe rotational axis (7) beyond the second projection disc (5).

## Revendications

1. Broyeur à impact, en particulier pour concasser des graines de cacao, avec un premier et un deuxième disque (1, 5) tournants, horizontaux, disposés parallèles et distants l'un au-dessus de l'autre et maintenus solidaires en rotation par une entretoise (6) centrée sur l'axe de rotation (7) des disques (1, 5), pièce qui s'étend vers le bas à partir du premier disque centrifuge (1) et à partir de laquelle le second disque (5), celui du bas, lequel présente un diamètre supérieur à celui du premier, s'étend radialement vers l'extérieur suivant une surface annulaire, et avec des plaques d'impact (4) entourant à une certaine distance les deux disques (1, 5), caractérisé en ce que la hauteur des plaques d'impact (4) est choisie telle que chacune d'elle recouvre les deux disques (1, 5) et en ce que les plaques d'impact sont, de haut en bas, inclinées vers l'extérieur, de sorte que les graines (2) projetées contre les plaques d'impact (4) par le premier disque (1) retombent vers le bas après s'être brisées sur la plaque d'impact, tandis que les graines non brisées (2a) sont renvoyées par la plaque d'impact vers le deuxième disque (5) qui les projette une seconde fois contre la plaque d'impact.

2. Broyeur à impact selon la revendication 1, caractérisé en ce que l'entretoise 6 est un cylindre dont la paroi supérieure porte une bride radiale (10) vissée contre le premier disque (1), et dont l'extrémité inférieure (11) s'étend dans la direction de l'arbre de rotation (7) au-delà du deuxième disque (5).
